Europäisches Patentamt

(19) European Patent Office

Office européen des brevets

(11) Veröffentlichungsnummer: **0 094 927**
**B1**

(12) # EUROPÄISCHE PATENTSCHRIFT

(45) Veröffentlichungstag der Patentschrift:
03.07.85

(51) Int. Cl.⁴: **B 23 Q 1/02, B 21 D 43/28**

(21) Anmeldenummer: **83890035.5**

(22) Anmeldetag: **15.03.83**

(54) **Vorrichtung zum Zuführen plattenförmiger Werkstücke zu einer Werkzeugmaschine.**

(30) Priorität: **19.05.82 AT 1987/82**

(43) Veröffentlichungstag der Anmeldung:
**23.11.83 Patentblatt 83/47**

(45) Bekanntmachung des Hinweises auf die Patenterteilung:
**03.07.85 Patentblatt 85/27**

(84) Benannte Vertragsstaaten:
**BE CH DE FR GB IT LI LU NL SE**

(56) Entgegenhaltungen:
**EP - A - 0 039 888**
**DE - B - 2 265 390**
**US - A - 2 843 249**
**US - A - 3 395 596**
**US - A - 3 757 645**

(73) Patentinhaber: **VOEST-ALPINE Aktiengesellschaft,
Werksgelände, A-4010 Linz (AT)**

(72) Erfinder: **Der Erfinder hat auf seine Nennung verzichtet**

(74) Vertreter: **Hübscher, Gerhard, Dipl.-Ing. et al,
Patentanwäite Dipl.-Ing. Gerhard Hübscher Dipl.-Ing.
Helmut Hübscher Dipl.-Ing. Heiner Hübscher
Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Zuführen plattenförmiger Werkstücke zu einer Werkzeugmaschine mit einem Auflagetisch, auf dem die Werkstücke in einer Längs- und einer Querrichtung mittels eines Mitnehmerzangen für die Werkstücke tragenden Schlittens verschiebbar sind, der auf einer in Querrichtung verlaufenden, in Längsrichtung verschiebbaren Schlittenführung verfahrbar ist, und mit in Querrichtung reihenweise an dem Auflagetisch angeordneten Werstückauflagern, die vertikal verschiebbar gelagert und reihenweise mittels je eines Antriebs über eine Betätigungswelle verstellbar sind, die einen mit einer Steuerschiene der Schlittenführung zusammenwirkenden Kurbelarm aufweist.

Um plattenförmige Werkstücke gegenüber einer Werkzeugmaschine, beispielsweise einer Stanzmaschine, ausrichten zu können, muss das Werkstück auf dem der Werkzeugmaschine zugeordneten Auflagetisch entsprechend verschoben werden können. Zu diesem Zweck ist nicht nur eine Bewegung in der üblichen, als Längsrichtung bezeichneten Zuführrichtung, sondern auch quer dazu erforderlich. Das Werstück wird folglich an einem Schlitten festgeklemmt, der mit einer Schlittenführung in Längsrichtung und auf der Schlittenführung in Querrichtung verfahren werden kann. Da das Werstück auf Werstückauflagern des Auflagetisches verschiebbar abgestützt ist, ergeben sich Schwierigkeiten bei der Schlittenbewegung, weil die Werstückauflager in die Bewegungsbahn des Schlittens ragen. Zur Vermeidung dieser Schwierigkeiten werden die Werkstückauflager im Bereich des Schlittens abgesenkt. Bei einer bekannten Konstruktion dieser Art (DE-AS 2265390) bestehen die Werkstückauflager aus vertikal im Auflagetisch verschiebbar gelagerten Stützstäben, die in Querreihen angeordnet sind und sich auf Nockenwellen reihenweise abstützen. Diese Nockenwellen weisen endseitig als Kurbelarme wirkende Mitnehmer auf, die mit einer mit der Schlittenführung verbundenen Steuerschiene zusammenwirken. Wird der Schlitten mit dem Werkstück in Längsrichtung bewegt, so wird, da die Längsbewegung des Schlittens nur über eine Verschiebung der Schlittenführung erfolgen kann, die Steuerschiene ebenfalls in Längsrichtung verschoben, so dass über die Mitnehmer der Nockenwellen die in den Bereich des Schlittens gelangenden Nockenwellen über die Steuerschiene verdreht werden, was auf Grund der Nockenform ein Absenken der Stützstäbe zur Folge hat. Da die Stützstäbe in Querreihen angeordnet sind und über die Nockenwellen reihenweise betätigt werden, kann der Schlitten auf der in Querrichtung verlaufenden Schlittenführung unbehindert über die abgesenkten Stützstäbe verfahren werden.

Um über die Stützstäbe auf die Nockenwellen kein Drehmoment auszuüben und stabile Arbeitsstellungen zu erhalten, stützen sich die Stützstäbe mittig auf entsprechenden Abflachungen der Nokkenwelle in der Arbeitsstellung ab. Damit kann zwar eine Drehmomentbelastung der Nockenwellen vermieden werden, doch wird zwangsläufig der Nachteil in Kauf genommen, dass die Stützstäbe bei einer Betätigung der Nockenwellen vor dem Absenken angehoben werden müssen, was eine Verformung des Werkstückes nach sich zieht, das ja in den Mitnehmerzangen des Schlittens unnachgiebig gehalten ist. Ausserdem ist das Einstellen und das Sicherstellen einer gleichen Stützhöhe für alle Stützstäbe kaum möglich, so dass mit einer nicht ebenen Abstützung des Werkstückes gerechnet werden muss. Dazu kommt noch, dass insbesondere bei schwereren Werkstücken vergleichsweise hohe Reibungskräfte zwischen den Nockenwellen und den Stützstäben wirksam werden, die einen hohen Verschleiss bedingen.

Der Erfindung liegt somit die Aufgabe zugrunde, diese Mängel zu vermeiden und eine Vorrichtung zum Zuführen plattenförmiger Werkstücke zu einer Werkzeugmaschine mit einfachen Mitteln so zu verbessern, dass die Werkstückauflager in einfacher Weise justiert und gleichmässig ohne Verbiegungsgefahr für das Werkstück gehoben und gesenkt werden können.

Die Erfindung löst die gestellte Aufgabe dadurch, dass die Werkstückauflager reihenweise auf vertikal verschiebbaren Querträgern vorgesehen sind und dass die Antriebe für die Werkstückauflager aus Kurbeltrieben bestehen, die jeweils mit einem Hebel an dem zugehörigen Querträger angelenkt und mit ihrem anderen Hebel drehfest mit der Betätigungswelle verbunden sind.

Die Anordnung der Werkstückauflager in einzelnen Querträgern bringt zunächst den Vorteil mit sich, dass nicht die einzelnen Werkstückauflager jeweils für sich gehoben und gesenkt werden müssen, was die gleichmässige Bewegung der Werkstückauflager einer Querreihe erheblich vereinfacht. Das Einstellen der Werkstückauflager hinsichtlich einer gewünschten Auflageebene kann über eine Justierung der Querträger ebenfalls ohne besonderen Aufwand durchgeführt werden. Der entscheidende Vorteil der erfindungsgemässen Konstruktion wird jedoch durch den besonderen Antrieb der Querträger über die Kniehebel erreicht, weil diese Kniehebeltriebe trotz der Gewichtsbelastungen eine erwünschte Bewegung der Querträger zulassen, ohne ein Verbiegen der Werkstücke befürchten zu müssen. Aus der Strecklage der Kniehebeltriebe ergibt sich bei einer Verdrehung der Betätigungswelle ein Absenken der Querträger, wobei die abgesenkte Stellung durch entsprechende Anschläge festgehalten werden kann. Die durch die Strecklage der Kniehebeltriebe gegebene Arbeitsstellung bietet darüber hinaus den Vorteil, dass die Betätigungswelle über den Kniehebeltrieb keinem Drehmoment ausgesetzt wird. Der Antrieb der Querträger über Kniehebel gewährleistet somit sowohl hinsichtlich der Querträgerbewegung als auch bezüglich der auftretenden Kräfte und des Verschleisses günstige Verhältnisse. Die Verdrehung der Betätigungswelle über einen Kurbelarm, der mit einer Steuerschiene der Schlittenführung zusammenwirkt, bereitet keinerlei Schwierigkeiten, weil die Steuerschiene eine an die gewünschte Bewegung der

Querträger angepasste Führungsbahn für den Kurbelarm aufweisen kann, der zur Verringerung der Reibung mit einer Laufrolle in die Führungsbahn eingreifen wird.

Damit die vertikale Verschiebbarkeit der Querträger mit einfachen Konstruktionsmitteln gewährleistet werden kann, können die Querträger auf vertikalen Führungssäulen verschiebbar gelagert sein. Die Querträger müssen zu diesem Zweck lediglich mit entsprechenden Gleithülsen versehen werden.

In der Zeichnung ist der Erfindungsgegenstand beispielsweise schematisch dargestellt. Es zeigen:

Fig. 1 eine erfindungsgemässe Vorrichtung zum Zuführen plattenförmiger Werkstücke zu einer Werkzeugmaschine in einer vereinfachten Draufsicht,

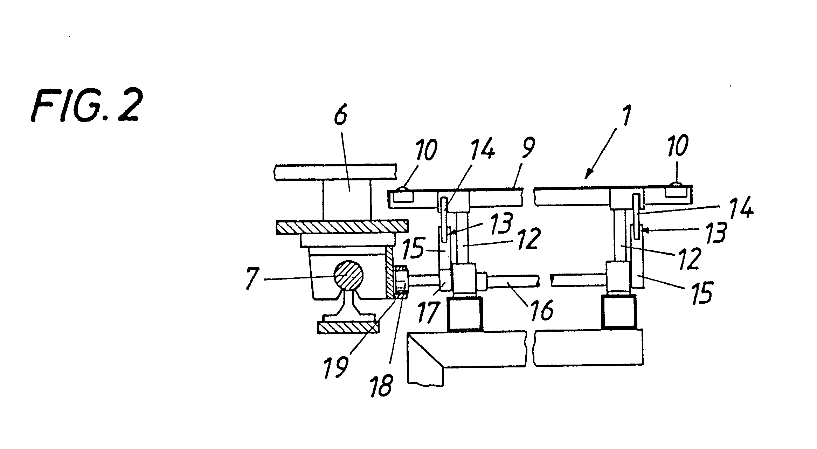

Fig. 2 diese Vorrichtung ausschnittsweise in einem vereinfachten Querschnitt,

Fig. 3 einen schematischen Längsschnitt durch einen Auflagetisch in einem grösseren Massstab und

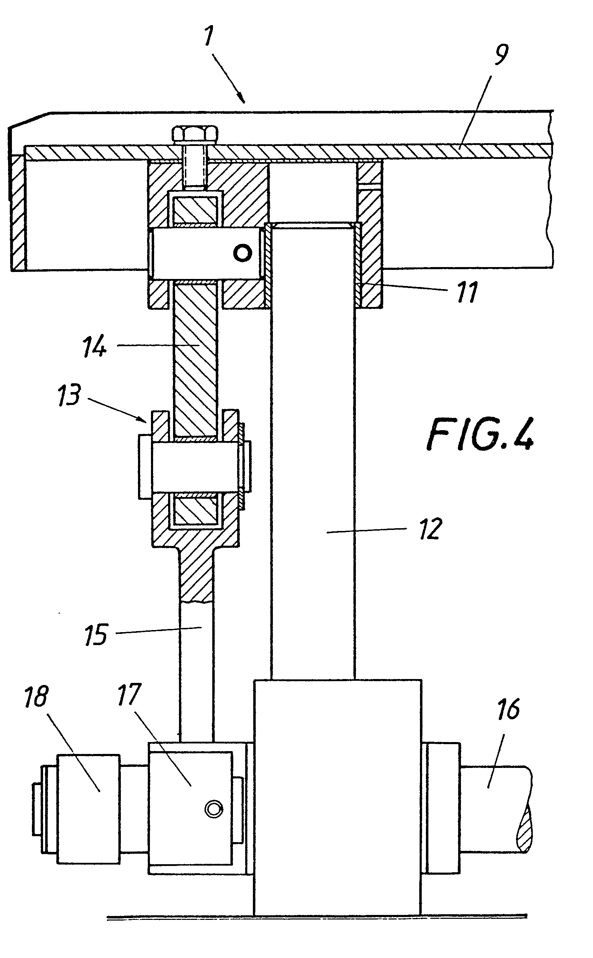

Fig. 4 den Antrieb eines Querträgers des Auflagetisches in einem Teilschnitt, in einem grösseren Massstab.

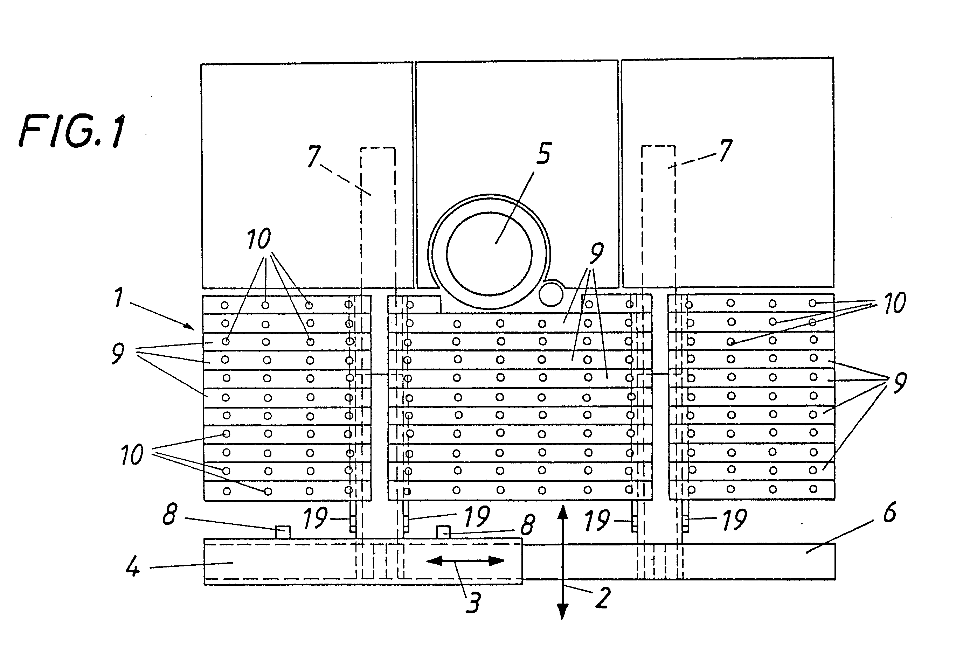

Wie insbesondere der Fig. 1 entnommen werden kann, besteht die dargestellte Vorrichtung im wesentlichen aus einem Auflagetisch 1, auf dem die Werkstücke in einer Längsrichtung 2 und einer Querrichtung 3 mit Hilfe eines Schlittens 4 gegenüber einer Werkzeugmaschine 5 verschoben werden können. Zu diesem Zweck kann der Schlitten 4 auf einer in Querrichtung 3 verlaufenden Schlittenführung 6 verfahren werden, die selbst in Längsrichtung 2 verschoben werden kann, und zwar auf Gleitschienen 7. Das Werkstück, das von Mitnehmerzangen 8 des Schlittens 4 erfasst wird, kann somit gegenüber der Werkzeugmaschine 5 positioniert werden. Damit jedoch der Schlitten 4 über den Auflagetisch bewegt werden kann, muss der Auflagetisch 1 im Bereich des Schlittens 4 abgesenkt werden. Zu diesem Zweck ist der Auflagetisch 1, der aus einem Mittelteil und zwei Seitenteilen besteht, aus Querträgern 9 zusammengesetzt, die je eine Reihe von Werkstückauflagern 10 in Form von Stützkugeln tragen. Diese Querträger 9 sind mit Hilfe von Gleithülsen 11 auf vertikalen Führungssäulen 12 verschiebbar gelagert und können mittels je eines Kniehebeltriebes 13 gehoben und gesenkt werden, der mit einem Hebel 14 am zugehörigen Querträger 9 angelenkt und mit seinem anderen Hebel 15 drehfest mit einer Betätigungswelle 16 verbunden ist. Diese Betätigungswelle 16 trägt einen Kurbelarm 17, der im dargestellten Ausführungsbeispiel mit dem Hebel 15 des Kniehebeltriebes einen Winkelhebel bildet, was jedoch nicht der Fall sein muss. Der Kurbelarm 17 ist mit einer seitlichen Laufrolle 18 versehen, die in eine Steuerschiene 19 eingreift, die mit der Schlittenführung 6 antriebsverbunden ist und gegenüber den Kurbelarmen 17 in Längsrichtung verschoben werden kann. Durch diese Relativbewegung zwischen der Steuerschiene 19 und den Kurbelarmen 17 werden die mit den Laufrollen 18 in die Kurvenbahn der Steuerschiene 19 eingreifenden Kurbelarme 17 entsprechend verschwenkt, was eine Verdrehung der Betätigungswelle 16 und damit eine Verstellung der Kniehebeltriebe 13 zur Folge hat. Da die Kurvenbahn der Steuerschiene 19 auf die Verschiebelage des Schlittens 4 in Längsrichtung abgestimmt ist, wird beim Verschieben der Schlittenführung 6 auf den Gleitschienen 7 der jeweils in den Bereich des Schlittens gelangende Querträger 9 mit den Werkstückauflagern 10 abgesenkt, so dass der Schlitten 4 unbehindert über den Auflagetisch 1 bewegt werden kann. Eine Querbewegung des Schlittens 4 über den abgesenkten Querträger 9 ist ja von vornherein möglich.

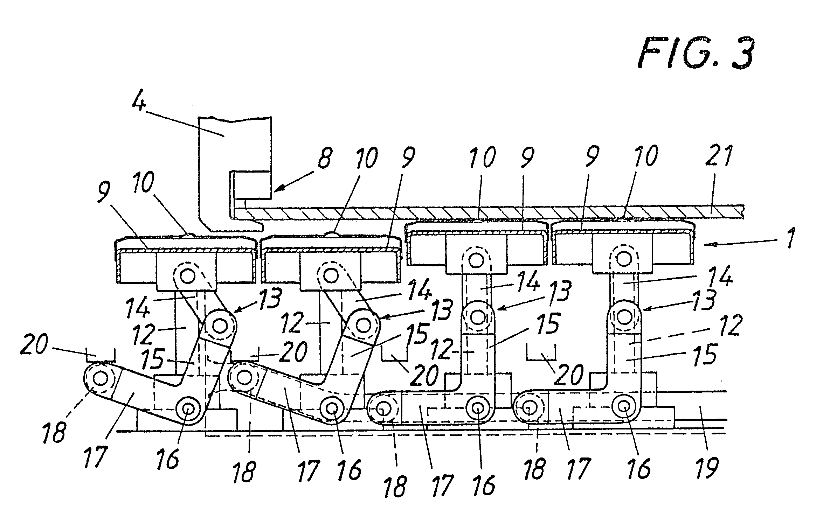

Um die abgesenkte Stellung der Querträger nicht über die Steuerschiene 19 festhalten zu müssen, die zu diesem Zweck länger ausgebildet sein müsste, können Anschläge 20 vorgesehen werden, die ein weiteres Verschwenken der Kurbelarme verhindern und die Kurbelarme 17 in einer Eingriffslage halten, in der die Laufrollen 18 sicher in die Steuerschiene 19 einlaufen können, wenn der Schlitten 4 in entgegengesetzter Richtung über den Auflagetisch 1 bewegt wird. Bei dieser Schlittenbewegung über die bewegte Schlittenführung 6 werden die Kurbelarme 17 gegensinnig verschwenkt und die zugehörigen Kniehebeltriebe in ihre die Arbeitslage der Querträger bestimmende Strecklage verstellt, in der eine momentenfreie Abstützung des jeweils auf dem Auflagetisch 1 befindlichen Werkstückes 21 sichergestellt ist, wie dies der Fig. 3 entnommen werden kann. Die Strecklage der Kniehebeltriebe 13 kann durch gesonderte Anschläge zusätzlich festgelegt werden, um allenfalls vorhandene Spiele ausgleichen zu können.

Auf Grund der Aufteilung des Auflagetisches 1 in einen Mittelteil und in zwei Seitenteile wird es möglich, die Schlittenführung 6 auf den zwischen dem Mittelteil und den Seitenteilen des Auflagetisches 1 verlegten Gleitschienen 7 zu verschieben, was eine besonders stabile Konstruktion erlaubt. In diesem Fall können jedoch die Querträger 9 nicht über die Tischbreite durchlaufen, so dass die den Tischteilen zugehörigen Querträgerteile für sich gehoben und gesenkt werden müssen, und zwar in gleicher Weise. Zur Wahrung einfacher Konstruktionsverhältnisse ist es dabei vorteilhaft, für jeden Tischteil eine gesonderte Steuerschiene vorzusehen, die sich entlang der Gleitschienen 7 erstreckt.

## Patentansprüche

1. Vorrichtung zum Zuführen plattenförmiger Werkstücke (21) zu einer Werkzeugmaschine (5) mit einem Auflagetisch (1), auf dem die Werkstücke (21) in einer Längs- und einer Querrichtung (2, 3) mittels eines Mitnehmerzangen (8) für die Werkstücke (21) tragenden Schlittens (4) verschiebbar sind, der auf einer in Querrichtung (3) verlaufenden, in Längsrichtung (2) verschiebbaren Schlittenführung (6) verfahrbar ist, und mit in Querrichtung (3) reihenweise an dem Auflagetisch (1) angeordneten Werkstückauflagern (10), die vertikal verschiebbar gelagert und reihenweise mittels je eines Antriebes über eine Betätigungswelle (16) verstellbar sind, die einen mit einer Steuerschiene (19) der Schlittenführung (6) zusammenwirkenden Kurbelarm (17) aufweist, dadurch gekennzeichnet, dass die Werkstückauflager (10) reihenweise auf vertikal verschiebbaren Querträgern (9) vorgesehen sind und dass die Antriebe für die Werkstückauflager (10) aus Kniehebeltrieben (13) bestehen, die jeweils mit einem Hebel (14) an dem zugehörigen Querträger (9) angelenkt und mit ihrem anderen Hebel (15) drehfest mit der Betätigungswelle (16) verbunden sind.

2. Vorrichtung nach Anspruch 1, dadurch gekennzeichnet, dass die Querträger (9) auf vertikalen Führungssäulen (12) verschiebbar gelagert sind.

## Claims

1. Apparatus for feeding platelike workpieces (21) to a machine tool (5) comprising a supporting deck (1), on which the workpieces (21) are displaceable in a longitudinal direction and a transverse direction (2, 3) by means of a carriage (4), which carries coupling tongs (8) for the workpieces (21) and which is movable on a carraige track (6), which extends in the transverse direction (3) and is displaceable in the longitudinal direction (3), and comprising workpiece supports (10), which are arranged on the supporting deck (1) in rows extending in the transverse direction, wherein the workpiece supports of each row are adjustable by means of an associated drive and an actuating shaft (16), which comprises a crank arm (17) that cooperates with a control rail (19) of the carriage track (6), characterized in that the workpiece supports (10) of each row are mounted on an associated transverse member (9), which is vertically displaceable, and the drives for the workpiece supports (10) consist of toggle joint drives (13), each of which has one lever (14) that is pivoted to the associated transverse member (9) and another lever (15) which is non-rotatably connected to the actuating shaft (16).

2. Apparatus according to claim 1, characterized in that the transverse members (9) are displaceably mounted on vertical guide columns (12).

## Revendications

1. Dispositif pour l'amenée de pièces en forme de plaque (21) à une machine-outil (5), comportant une table d'appui (1) sur laquelle les pièces (21) peuvent coulisser dans une direction longitudinale (2) et dans une direction transversale (3) au moyen d'un coulisseau (4) portant des pinces d'entraînement (8) pour les pièces (21) et qui peut se déplacer sur un guide (6) de coulisseau situé dans la direction transversale (3) et pouvant coulisser en direction longitudinale (2), et des appuis (10) de pièce, disposés par rangées en direction transversale (3) sur la table d'appui (1) et qui sont montés de manière à pouvoir coulisser verticalement et peuvent être réglés par rangées, chaque fois au moyen d'un entraînement, par l'intermédiaire d'un arbre d'actionnement (16) qui présente un bras de manivelle (17) coopérant avec une glissière de commande (19) du guide (6) de coulisseau, caractérisé par le fait que les appuis de pièce (10) sont prévus par rangées sur des traverses (9) pouvant coulisser verticalement et que les entraînements des appuis de pièce (10) sont formés de mécanismes à genouillère (13) qui sont articulés chacun par un levier (14) à la traverse correspondante (9) et sont reliés par leur autre levier (15) à l'arbre d'actionnement (16), de façon solidaire en rotation.

2. Dispositif selon la revendication 1, caractérisé par le fait que les traverses (9) sont montées de manière à pouvoir coulisser sur des colonnes verticales (12) de guidage.

FIG.1

0 094 927

FIG. 2

FIG. 3

FIG.4